(19) Europäisches Patentamt / European Patent Office / Office européen des brevets

(11) **EP 3 531 768 B1**

(12) **EUROPEAN PATENT SPECIFICATION**

(45) Date of publication and mention of the grant of the patent:
**23.02.2022 Bulletin 2022/08**

(21) Application number: **17870829.3**

(22) Date of filing: **07.11.2017**

(51) International Patent Classification (IPC):
*H04W 72/04* (2009.01)     *H04W 72/12* (2009.01)

(52) Cooperative Patent Classification (CPC):
**H04W 72/04; H04W 72/12**

(86) International application number:
**PCT/CN2017/109757**

(87) International publication number:
**WO 2018/090855 (24.05.2018 Gazette 2018/21)**

(54) **UPLINK DATA TRANSMISSION METHOD AND EQUIPMENT**

VERFAHREN UND AUSRÜSTUNG ZUR UPLINK-DATENÜBERTRAGUNG

PROCÉDÉ DE TRANSMISSION DE DONNÉES DE LIAISON MONTANTE ET ÉQUIPEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.11.2016 CN 201611014001**

(43) Date of publication of application:
**28.08.2019 Bulletin 2019/35**

(73) Proprietor: **Huawei Technologies Co., Ltd.
Longgang District
Shenzhen, Guangdong 518129 (CN)**

(72) Inventors:
• **WANG, Fan
Shenzhen
Guangdong 518129 (CN)**
• **LIU, Zhe
Shenzhen
Guangdong 518129 (CN)**

(74) Representative: **Epping - Hermann - Fischer
Patentanwaltsgesellschaft mbH
Schloßschmidstraße 5
80639 München (DE)**

(56) References cited:
**WO-A1-2017/166998     CN-A- 103 002 509
US-A1- 2016 100 407**

• **SEQUANS COMMUNICATIONS: "RB Allocation for PUSCH", 3GPP DRAFT; R1-162756, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 1 April 2016 (2016-04-01), XP051079675, Retrieved from the Internet: URL:http://www.3gpp.org/ftp/tsg_ran/WG1_RL 1/TSGR1_84b/Docs/ [retrieved on 2016-04-01]**
• **QUALCOMM INCORPORATED: "SRS procedures for eLAA", 3GPP DRAFT; R1-164411 SRS PROCEDURES IN ELAA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 14 May 2016 (2016-05-14), XP051096468, Retrieved from the Internet: URL:http://www.3gpp.org/ftp/tsg_ran/WG1_RL 1/TSGR1_85/Docs/ [retrieved on 2016-05-14]**

- HUAWEI HISILICON: "Discussion on UE/BS demodulation performance requirements for eLAA", 3GPP DRAFT; R4-1609423 ELAA DEMOD REQUIREMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Reno, Nevada, USA; 20161114 - 20161118 7 November 2016 (2016-11-07), XP051195244, Retrieved from the Internet: URL:http://www.3gpp.org/ftp/tsg_ran/WG4_Radio/TSGR4_81/Docs/ [retrieved on 2016-11-07]
- "RB Allocation for PUSCH", 3GPP TSG RAN WG 1 Meeting #84bis R1-162756, 1 April 2016 (2016-04-01), pages 1-3, XP051079675,
- ERICSSON: "Uplink Resource Allocation Design for Enhanced LAA", 3GPP TSG-RAN WG1#84 R1-160994, 6 February 2016 (2016-02-06), pages 1-3, XP051064478,
- HUAWEI et al.: "Discussion on Equal and Non-equal Multi-interlace Based PUSCH Structure", 3GPP TSG RAN WG1 Meeting #85 R1-164831, 14 May 2016 (2016-05-14), pages 1-3, XP051096307,
- MEDIATEK INC: "Considerations on PUSCH for LAA", 3GPP DRAFT; R1-160972, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian's, Malta; 20160215 - 20160219 14 February 2016 (2016-02-14), XP051054279, Retrieved from the Internet: URL:http://www.3gpp.org/ftp/Meetings_3GPP_SYNC/RAN1/Docs/ [retrieved on 2016-02-14]

## Description

## TECHNICAL FIELD

The present invention relates to the field of communications technologies, and in particular, to an uplink data transmission method and a device.

## BACKGROUND

In a conventional Long Term Evolution (Long Term Evolution, LTE) system, data can be transmitted only in a licensed spectrum. As requirements for wireless broadband data services continuously increase, especially in some hotspot urban areas, licensed spectrums may hardly meet service volume requirements. Therefore, the 3rd Generation Partnership Project (3rd Generation Partnership Project, 3GPP) researched on and discussed a licensed-assisted access (licensed-assisted access, LAA) project proposal and a new-radio unlicensed (new-radio unlicensed, NR-U) project proposal, to extend an LTE platform and an NR platform to an unlicensed (unlicensed) spectrum, thereby meeting ever-increasing service volume requirements.

There are two important regulations concerning an unlicensed frequency band:

1. Occupied channel bandwidth (occupied channel bandwidth, OCB): This is a spectrum occupation regulation. To be specific, the unlicensed frequency band requires that a signal sent by a terminal occupy at least 80% of a system bandwidth.
2. Power spectral density (power spectral density, PSD): This is a power regulation. To be specific, the unlicensed frequency band restricts power per MHz of the signal sent by the terminal.

To fully utilize power per MHz while meeting the bandwidth occupation regulation, a frequency-domain discrete structure (Interlace) that is based on a physical resource block (physical resource block, PRB) is proposed for an uplink in an LAA system.

The PRB-based interlace has the following features:

1. A system with an uplink data bandwidth of $N_{RB}^{UL}$ PRBs is divided into M sub-bands, each sub-band includes $\left\lfloor \dfrac{N_{RB}^{UL}}{M} \right\rfloor$ PRBs, and numbers of $N_{RB}^{UL}$ PRBs are [0, $N_{RB}^{UL} - 1$]. In addition, each PRB includes $N_{SC}^{RB}$ resource elements (Resource Element, RE), and therefore serial numbers of the REs in the PRB may be denoted as [0, $N_{SC}^{RB} - 1$].

$N_{RB}^{UL}$ represents an uplink bandwidth configuration and is generally represented as a multiple of $N_{SC}^{RB}$, and $N_{SC}^{RB}$ represents a size of a resource block (resource block, RB) in frequency domain and may be represented by using a quantity of subcarriers.

2. Each interlace occupies M PRBs. To be specific, each interlace occupies one PRB in each of the M sub-bands. In addition, M PRBs occupied by one interlace are evenly distributed within an entire uplink data frequency band, and two adjacent PRBs occupied by one interlace are separated by $N_{RB}^{SB} - 1$ PRBs.

3. A value range of an interlace occupied by an uplink data channel scheduled to the terminal is [1, $N_{RB}^{SB}$]. In other words, a value range of a quantity of PRBs included in the uplink data channel is [M, $M \bullet N_{RB}^{SB}$].

A concept of the interlace is proposed in the LAA system. Therefore, a bandwidth is allocated in the LAA system in a form of interlaces. If a PRB is used as a granularity, a bandwidth allocation granularity in the LAA system is M PRBs, but a resource allocation granularity in the LTE system is as fine as one PRB. Apparently, the bandwidth allocation granularity in the LAA system is coarser than that in the LTE system. As a result, a resource allocation manner is inflexible, and uplink transmission efficiency of the terminal is low.

SEQUANS COMMUNICATIONS: "RB Allocation for PUSCH", 3GPP DRAFT; R1-162756, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX ; FRANCE,vol. RAN WG1, no. Busan, Korea; discusses RB Allocation for PUSCH. In this contribution, designs for LAA UL RB allocation are provided.

QUALCOMM INCORPORATED: "SRS procedures for eLAA", 3GPP DRAFT; R1-164411 SRS PROCEDURES IN ELAA, 3RD GENERATION PARTNERSHIP PROJECT (3GPP), MOBILE COMPETENCE CENTRE ; 650, ROUTE DES LUCIOLES; F-06921 SOPHIA-ANTI POLIS CEDEX ; FRANCE,vol. RAN WG1, no. Nanjing, China; proposes 1. RAN1 to discuss the tradeoff between channel sampling frequency and SRS usability at celledge before confirming the working assumption for SAS based on the legacy comb structure.2. Periodic transmission of SAS is not supported in eLAA. 3. Aperiodic SAS without PUSCH is supported in UL subframes. 4. PUSCH and SAS are power controlled independently and can be transmitted at different power within a subframe as in Rel-12LTE. 5. RANI to choose between ARC based periodic configuration of SAS resources and dynamic resource indication.

HUAWEI HISILICON: "Discussion on UE/BS demodulation performance requirements for eLAA", 3GPP DRAFT; R4-1609423 ELAA DEMOD REQUIREMENTS,3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX ; FRANCE, vol. RAN WG4, no. Reno, Nevada, USA; discusses the impact of eLAA on the RAN4 specification of UE and BS demodulation performance requirements. In the Annex the agreements in RANI according to R1-168210 are briefly summarized. In Section 2 the general impact on UE and 8S performance requirements is analysed. In Section 3, the UE performance requirements that should be specified in Rel-14 are discussed.

MEDIATEK INC: "Considerations on PUSCH for LAA", 3GPP DRAFT; R1-160972, 3RD GENERATION PARTNERSHIP PROJECT (3GPP), MOBILE COMPETENCE CENTRE; 650, ROUTE DE LUCIOLES; F-06921 SOPHIA-ANTIPOLIS CEDEX; FRANCE, vol. RAN WG1, no. St Julian's, Malta; 20160215 - 20160219 14 February 2016, XP051054279 describes a PUSCH design in LAA. It is described that depending on the traffic going through eLAA uplink, a granularity of resource grant may or may not be fine enough and that, e.g., a smaller resource unit can be used.

US 2016/100407 A1 describes includes receiving from a base station an indication of a set of one or more uplink interlaces of an unlicensed radio frequency spectrum band allocated for a sounding reference signal, and transmitting the sounding reference signal for a user equipment (UE) over the indicated set of one or more uplink interlaces of the unlicensed radio frequency spectrum band.

## SUMMARY

Embodiments of the present invention provide an uplink data transmission method and a device, to refine a bandwidth allocation granularity, thereby enhancing resource allocation flexibility and improving uplink transmission efficiency of a terminal. The present invention is defined by the attached set of claims.

According to a first aspect, an uplink resource allocation method is provided. The method may be performed by a terminal. The method includes: receiving, by a terminal, scheduling signaling sent by a network device, wherein the scheduling signaling is used to indicate at least one frequency-domain discrete structure; determining, by the terminal, the at least one frequency-domain discrete structure based on the scheduling signaling, wherein a size value of the at least one frequency-domain discrete structure belongs to a set that comprises a plurality of size values of frequency-domain discrete structures, the set comprises a size value of a first frequency-domain discrete structure and a size value of a second frequency-domain discrete structure or the set comprises the size value of the second frequency-domain discrete structure, and the size value of the second frequency-domain discrete structure is less than the size value of the first frequency-domain discrete structure; and initiating, by the terminal, uplink data transmission by using the at least one frequency-domain discrete structure, wherein the terminal maps uplink data to an resource element occupied by the at least one frequency-domain discrete, wherein the at least one frequency-domain discrete structure comprises a plurality of second frequency-domain discrete structures that have a same size value, and resource elements occupied by each of the second frequency-domain discrete structures in an occupied physical resource block are distributed continuously in frequency, wherein the method further comprises: determining, by the terminal based on the scheduling signaling, frequency domain positions of the resource elements occupied by the second frequency-domain discrete structures in the physical resource, wherein the frequency domain position of the second frequency-domain discrete structure is notified to the terminal by using the scheduling, wherein an uplink bandwidth allocated to the terminal is divided into a plurality of sub-bands in frequency domain, and the frequency-domain discrete structure occupies at least one resource element in at least one physical resource block in the sub-, wherein the determining, by the terminal, the at least one frequency-domain discrete structure based on the scheduling signaling comprises: determining, by the terminal, a physical resource block occupied by the at least one frequency-domain discrete structure in the sub-band and the size value of the at least one frequency-domain discrete structure based on a resource indication value comprised in the scheduling signaling.

According to a second aspect, an uplink data transmission method is provided. As a method corresponding to the method provided in the first aspect, the method may be performed by a network device. The network device is, for example, a base station. The method includes: determining, by a network device, at least one frequency-domain discrete structure, wherein a size value of the at least one frequency-domain discrete structure belongs to a set that comprises a plurality of size values of frequency-domain discrete structures, the set comprises a size value of a first frequency-domain discrete structure and a size value of a second frequency-domain discrete structure or the set comprises the size value of the second frequency-domain discrete structure, and the size value of the second frequency-domain discrete structure is less than the size value of the first frequency-domain discrete structure; sending, by the network device, scheduling signaling to a terminal, wherein the scheduling signaling is used to indicate the at least one frequency-domain discrete structure; and receiving, by the network device by using the at least one frequency-domain discrete structure, uplink data transmission initiated by the terminal, wherein the at least one frequency-domain discrete structure comprises a plurality of second frequency-domain discrete structures that have a same size value, and resource elements occupied by each of the second frequency-domain discrete structures in an occupied physical resource block are distributed continuously in frequency, wherein the scheduling signaling is further used to indicate frequency domain positions of the resource elements occupied by the second frequency-domain discrete structures in the physical resource block, wherein the scheduling signaling carries a resource indication value, and the resource indication value is used to indicate a quantity of physical resource blocks occupied by the at least one frequency-domain discrete structure in a sub-band and the size value of the at least one frequency-domain discrete structure.

According to a third aspect, an apparatus is provided. The apparatus may be configured to perform the method provided in the first aspect.

According to a fourth aspect, an apparatus is provided. The apparatus may be configured to perform the method provided in the second aspect.

In the embodiments of the present invention, the second frequency-domain discrete structure is provided, to refine a resource allocation granularity, so that resource allocation can be more flexible, thereby improving uplink transmission efficiency of the terminal.

## BRIEF DESCRIPTION OF DRAWINGS

FIG. 1 is a schematic diagram of an application scenario according to an embodiment of the present invention;

FIG. 2 is a flowchart of an uplink data transmission method according to an embodiment of the present invention;

FIG. 3 is a schematic diagram of resource elements;

FIG. 4A is a schematic diagram of interlaces allocated to a terminal according to an embodiment of the present invention;

FIG. 4B and FIG. 4C are schematic diagrams of REs occupied by a second interlace in one PRB according to an embodiment of the present invention;

FIG. 5 is a schematic structural diagram of a terminal according to an embodiment of the present invention;

FIG. 6 is a schematic structural diagram of a network device according to an embodiment of the present invention;

FIG. 7 is a schematic structural diagram of a terminal according to an embodiment of the present invention; and

FIG. 8 is a schematic structural diagram of a network device according to an embodiment of the present invention.

## DESCRIPTION OF EMBODIMENTS

The following explains some terms in the present invention, to facilitate understanding by a person skilled in the art.

(1) A terminal may also be referred to as user equipment and is a device that provides a user with voice and/or data connectivity, for example, may include a handheld device with a wireless connection function, or a processing device connected to a wireless modem. The user equipment may communicate with a core network via a radio access network (radio access network, RAN), to exchange voice and/or data with the RAN. The user equipment may include UE, a wireless terminal device, a mobile terminal device, a subscriber unit (subscriber unit), a subscriber station (subscriber station), a mobile station (mobile station), a mobile (mobile), a remote station (remote station), an access point (access point, AP), a remote terminal (remote terminal), an access terminal (access terminal), a user terminal (user terminal), a user agent (user agent), a user device (user device), or the like. For example, the user equipment may be a mobile phone (or referred to as a "cellular" phone), a computer with a mobile terminal, or a portable, pocket-sized, handheld, computer built-in, or in-vehicle mobile apparatus, for example, a device such as a personal communications service (personal communications service, PCS) phone, a cordless phone, a Session Initiation Protocol (SIP) phone, a wireless local loop (wireless local loop, WLL) station, or a personal digital assistant (personal digital assistant, PDA).

(2) A network device is, for example, a base station (for example, an access point), and may be specifically a device that communicates with a wireless terminal via one or more sectors on an air interface in an access network. The base station may be configured to: mutually convert a received over-the-air frame and an IP packet, and serve as a router between a wireless terminal device and a remaining portion of the access network. The remaining portion of the access network may include an Internet Protocol (IP) network. The base station may further coordinate attribute management of the air interface. For example, the base station may be an evolved NodeB (NodeB, eNB, or eNodeB, evolved NodeB) in a system such as a Long Term Evolution (Long Term Evolution, LTE) or Long Term Evolution Advanced (LTE-advanced, LTE-A) system. This is not limited in the embodiments of the present invention.

(3) An LAA-LTE system is briefly referred to as an LAA system below. An LTE technology is used in an unlicensed carrier, and based on a carrier aggregation architecture, a licensed carrier is used as a primary cell (PCell) and the unlicensed carrier is used as a secondary cell (SCell).

(4) In the embodiments of the present invention, there are two frequency-domain discrete structures: a first frequency-domain discrete structure and a second frequency-domain discrete structure. In the following, the first frequency-domain discrete structure may also be referred to as a first interlace, and the second frequency-domain discrete structure may also be referred to as a second interlace. It should be noted that the first interlace is an interlace mentioned in an existing standard, and the second interlace is a new interlace proposed in the embodiments of the present invention. To differentiate between the two types of interlaces, the interlace in the existing standard is referred to as the first interlace in the embodiments of the present invention. The first interlace and the second interlace may also be collectively referred to as a flexible interlace.

A size value of a frequency-domain discrete structure is also referred to as an interlace size value below. The interlace size value is an uplink bandwidth occupied by the interlace. A size value of the first interlace is referred to as a first interlace size value below, and a size value of the second interlace is referred to as a second interlace size value below. It should be noted that the first interlace size value does not refer to a value in a real sense, but is an uplink bandwidth occupied by the first interlace. There are a plurality of types of first interlaces, and the plurality of types of first interlaces may occupy different uplink bandwidths. Therefore, the first interlace size value may include a plurality of values. The same applies to the second interlace size value.

A difference between the first interlace and the second interlace lies in that they occupy different quantities of REs in PRBs. A quantity of REs occupied by the first interlace in a PRB is equal to a total quantity of REs included in the PRB. In other words, the first interlace occupies all REs in the PRB. A quantity of REs occupied by the second interlace in a PRB is less than a total quantity of REs included in the PRB. In other words, the second interlace occupies some REs in the corresponding PRB. In this sense, the first interlace may also be referred to as a complete interlace, and the second interlace may also be referred to as a partial interlace. In addition, the second interlace size value is less than the first interlace size value. For example, one PRB includes 12 REs. If the first interlace occupies the PRB, the first interlace occupies all the 12 REs of the PRB. If the second interlace occupies the PRB, the second interlace occupies some REs of the PRB, for example, five or sixth of the 12 REs. A specific quantity of REs occupied by the second interlace in one PRB may be defined by using a protocol or a standard, or may be determined by a base station.

In the embodiments of the present invention, if an uplink bandwidth allocated to a terminal is divided into M sub-bands (or referred to as sub carrier bands), one interlace may cross a plurality of sub-bands. Generally, one interlace may cross all the M sub-bands. In this case, one interlace may occupy at least one RE in at least one PRB in one sub-band. For example, one interlace may occupy one PRB in each of the M sub-bands, and the M PRBs occupied by one interlace may be evenly distributed at an equal distance in frequency domain. Certainly, in the embodiments of the present invention, a quantity of PRBs occupied by one interlace in one sub-band is not limited. Alternatively, one interlace may occupy a plurality of PRBs in one sub-band, provided that every two adjacent PRBs in the PRBs occupied by one interlace are equally spaced in frequency domain.

One second interlace may occupy equal or unequal quantities of REs in different occupied PRBs. If one second interlace occupies equal quantities of REs in different occupied PRBs, frequency domain positions of REs occupied by the second interlace in the corresponding PRBs may also be the same. For example, one second interlace occupies one PRB in each of M sub-bands, the second interlace occupies four REs in each PRB, and the four REs are all located at same frequency domain positions in corresponding PRBs. Alternatively, one second interlace occupies one PRB in each of M sub-bands, and occupies four REs in each of some PRBs in the M PRBs and occupies five REs in each of the other some PRBs. Frequency domain positions of four of the five REs in the PRB are the same as frequency domain positions of four REs in a corresponding PRB in which the four REs are occupied. A remaining RE of the five REs is distributed continuously with the other four REs in frequency domain.

In the embodiments of the present invention, if a network device allocates a plurality of second interlaces to a terminal, each second interlace allocated to the terminal may occupy a same quantity or different quantities of REs in PRBs corresponding to each second interlace.
(5) In the embodiments of the present invention, the terms "system" and "network" may be used interchangeably. "A plurality of' means "two or more". The term "and/or" describes an association relationship between associated objects and represents that three relationships may exist. For example, A and/or B may represent the following three cases: Only A exists, both A and B exist, and only B exists. In addition, unless otherwise specified, the character "/" generally indicates an "or" relationship between the associated objects.

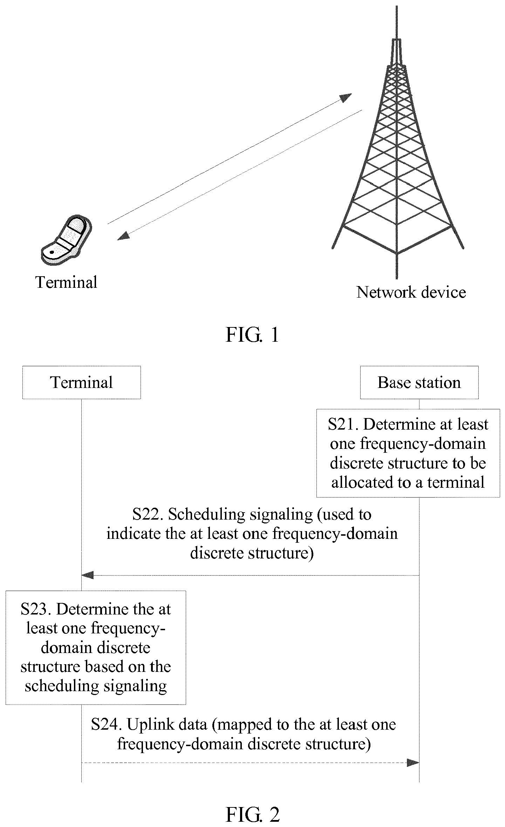

Referring to FIG. 1, an application scenario of the embodiments of the present invention is first described. FIG. 1 includes a terminal and a network device, and the terminal and the network device can communicate with each other. When the terminal needs to send uplink data to the network device, the network device allocates an uplink transmission resource to the terminal, so that the terminal sends the uplink data to the network device by using the allocated uplink transmission resource. In an existing LAA system, a network device allocates a transmission resource to a terminal in a form of interlaces. If one interlace occupies M PRBs, an allocation granularity is M PRBs. Apparently, the granularity is relatively coarse, and an allocation manner is not flexible enough.

In view of this, the embodiments of the present invention provide a new interlace structure. In the embodiments of the present invention, the new interlace structure is referred to as a second interlace structure, briefly referred to as a second interlace. A quantity of REs occupied by the second interlace in a PRB occupied by the second interlace is less than a total quantity of REs included in the PRB. In this case, even if a network device allocates a transmission resource to a terminal still in a form of interlaces, because an allocated interlace can include the second interlace, this is equivalent that a resource allocation granularity is refined, so that a resource allocation manner is more flexible, thereby improving uplink transmission efficiency.

In addition, the second interlace occupies some REs in a PRB. In this case, a remaining RE in the PRB may further be used by another terminal. In this way, different terminals can use a same PRB, thereby improving utilization of the PRB and also implementing resource multiplexing between terminals.

It should be understood that the method provided in the embodiments of the present invention can be applied to an LAA system, and can also be applied to another system in which a resource is allocated in a form of interlaces, for example, an NR-U system. This is not limited in the embodiments of the present invention.

The following describes the technical solutions provided in the embodiments of the present invention with reference to the accompanying drawings of this specification.

Referring to FIG. 2, an embodiment of the present invention provides an uplink data transmission method in which the application scenario shown in FIG. 1 is used as an example. In this embodiment of the present invention, for example, a network device is a base station. S21. The base station determines at least one interlace to be allocated to a terminal.

The base station first determines the at least one interlace to be allocated to the terminal, and then determines at least one interlace size value corresponding to the at least one interlace. The interlace size value is an uplink bandwidth occupied by the interlace. The at least one interlace size value corresponds to the at least one interlace, and the at least one interlace is an interlace allocated by the base station to the terminal. In other words, the base station may determine interlaces actually allocated to the terminal.

Then, the base station may determine at least one type of interlace size based on the at least one interlace and the at least one interlace size value. An interlace size includes an uplink bandwidth occupied by an interlace allocated to the terminal and a quantity of interlaces. Herein, interlace sizes are classified into different types, and the different types are differentiated based on whether interlaces are continuous. For example, the base station allocates five interlaces to the terminal, and the five interlaces are respectively an interlace 1 to an interlace 3, an interlace 5, and an interlace 6. In this case, because the interlace 1 to the interlace 3 are continuous interlaces, a total uplink bandwidth occupied by the three interlaces, namely, a sum of size values of the three interlaces, and a quantity 3 are used as content included in one type of interlace size; and because the interlace 5 and the interlace 6 are continuous interlaces, a total uplink bandwidth occupied by the two interlaces and a quantity 2 are used as content included in another type of interlace size. In other words, the base station allocates two types of interlace sizes to the terminal. Alternatively, for example, the base station allocates five interlaces to the terminal, and the five interlaces are respectively an interlace 1 to an interlace 5. In this case, because the interlace 1 to the interlace 5 are continuous interlaces, a total uplink bandwidth occupied by the five interlaces and a quantity 5 are used as content included in one type of interlace size. In other words, the base station allocates one type of interlace size to the terminal.

In this embodiment of the present invention, if the base station allocates a first interlace to the terminal, a size value of the first interlace (which may also be referred to as a first interlace size value) may be selected from a set. The set includes a plurality of first interlace size values. For example, the set is {0, M, 2M, ...,

$$\{0, \ M, \ 2M, \ ..., \ M \bullet N_{RB}^{SB}\}$$, where a unit is PRB. If the base station allocates a second interlace to the terminal, a size value of the second interlace (which may also be referred to as a second interlace size value) may also be selected from the set. The set further includes a plurality of second interlace size values. For example, the set is {1, 2, ..., M-1}, where a unit is PRB. In other words, the set may include the first interlace size values and the second interlace size values or the set may include only the second interlace size values. If the set includes only the second interlace size values, if the base station allocates the first interlace to the terminal, the size value of the first interlace may be obtained from another set that includes the first interlace size value. For the base station, the set that includes the interlace size values is known information. Therefore, when allocating an interlace to the terminal, the base station first determines the to-be-allocated at least one interlace; selects, from the set, the at least one interlace size value corresponding to the at least one interlace; and determines the at least one type of interlace size based on a continuity status of the at least one interlace corresponding to the at least one interlace size value. M is a total quantity of subbands obtained by dividing an uplink bandwidth of the terminal. Currently, a value of M is generally 10. Certainly, a specific value of M is not limited in this embodiment of the present invention.

In this embodiment of the present invention, the at least one interlace allocated by the base station includes at least one second interlace. In other words, the at least one interlace size value allocated by the base station includes at least one second interlace size value. In an implementation, the at least one interlace may include one second interlace. In other words, the at least one interlace size value allocated by the base station includes one second interlace size value, and a remaining interlace is a first interlace. In another implementation, the at least one interlace allocated by the base station includes a plurality of second interlaces. In other words, the at least one interlace size value allocated by the base station includes a plurality of second interlace size values. In this case, to make an interlace determined by the terminal more accurate, a quantity of second interlaces included in the at least one interlace allocated to the terminal in this time may be notified to the terminal by the base station, pre-defined by using a standard or a protocol, or predetermined by the base station and the terminal through negotiation.

Alternatively, if different allocation manners are obtained through classification based on a quantity of second interlaces included in the at least one interlace, for example, a manner in which the at least one interlace includes one second interlace is a first allocation manner, and a manner in which all the at least one interlace is the second interlace is a second allocation manner, the terminal only needs to know a manner of allocating the at least one interlace in this time. Similarly, the allocation manner may be notified to the terminal by the base station, pre-defined by using a standard or a protocol, or predetermined by the base station and the terminal through negotiation.

S22. The base station sends scheduling signaling to the terminal, where the scheduling signaling is used to indicate the at least one interlace; and the terminal receives the scheduling signaling. If the quantity of second interlaces included in the at least one interlace is notified to the terminal by the base station, the scheduling signaling may also carry indication information that is used to indicate the quantity of second interlaces included in the at least one interlace. The scheduling signaling is used to schedule uplink transmission.

The scheduling signaling may also be used to indicate the at least one type of interlace size. To be specific, after determining the at least one type of interlace size, the base station may send the scheduling signaling to the terminal. The scheduling signaling may be used to schedule uplink transmission. In this case, after receiving the scheduling signaling, the terminal may determine, based on the at least one type of interlace size indicated by the scheduling signaling, the at least one interlace allocated by the base station.

S23. The terminal determines the at least one interlace based on an indication of the scheduling signaling.

After the terminal receives the scheduling signaling, if the scheduling signaling is used to indicate the at least one type of interlace size, the terminal can determine the at least one interlace based on the at least one type of interlace size indicated by the scheduling signaling. Specifically, after determining the at least one type of interlace size based on the scheduling signaling, the terminal can determine the at least one interlace size value based on the at least one type of interlace size. Each type of interlace size includes an uplink bandwidth occupied by one interlace or a plurality of continuous interlaces, in other words, includes one or more interlace size values; and includes a quantity of interlaces.

For example, the terminal obtains two types of interlace sizes based on the scheduling signaling, where a first type of interlace size includes an uplink bandwidth of 25 PRBs and an interlace quantity of 3, and a second type of interlace size includes an uplink bandwidth of 20 PRBs and an interlace quantity of 2. In addition, the base station may further notify the terminal of a quantity of second interlaces included in interlaces allocated in this time. In this case, the terminal may determine three interlace size values: 10, 10, and 5 based on the first type of interlace size; and determine two interlace size values: 10 and 10 based on the second type of interlace size.

In this embodiment of the present invention, the scheduling signaling may carry a resource indication value, and the resource indication value may be used to indicate the at least one interlace size value. Specifically, the resource indication value may be used to indicate the at least one type of interlace size. The terminal can determine the at least one interlace size value based on the at least one type of interlace size indicated by the resource indication value, and can determine the corresponding interlace after determining the at least one interlace size value. In addition, the terminal further needs to know a position of the allocated interlace. Therefore, the resource indication value may further indicate a PRB occupied by the at least one interlace in a sub-band, in other words, indicate a position of the at least one interlace in the sub-band, so that the terminal can determine the at least one interlace.

After determining the at least one interlace size value, the terminal can determine the at least one interlace based on the at least one interlace size value. The interlace size value and the interlace are in a one-to-one correspondence. The at least one interlace includes at least one second interlace.

A manner in which the terminal determines the at least one interlace based on the at least one interlace size value includes but is not limited to the following two manners:

1. Sub-band quantity-based determining manner
Generally, the total quantity M of sub-bands obtained by dividing the uplink bandwidth of the terminal is less than or equal to a total quantity of REs included in one PRB. One interlace generally occupies at least one PRB in each sub-band regardless of whether the interlace is a first interlace or a second interlace. Certainly, the second interlace occupies only some REs in an occupied PRB. In this sense, it may also be considered that the second interlace only partially rather than entirely occupies each occupied PRB in practice. However, for ease of description, in this specification, any PRB in which the second interlace occupies an RE is considered as a PRB occupied by the second interlace. To be specific, in this specification, that the first interlace occupies a PRB means that the first interlace occupies all REs in the PRB; and that the second interlace occupies a PRB means that the second interlace occupies some REs in the PRB. Therefore, in the first manner, the terminal may compare each of the at least one interlace size value with the quantity of sub-bands obtained by dividing the uplink bandwidth of the terminal, to determine a value relationship between each interlace size value and the quantity of sub-bands; and then determine whether a corresponding interlace is a first interlace or a second interlace based on the value relationship between each interlace size value and the quantity of sub-bands. The terminal can determine that an interlace corresponding to an interlace size value that is equal to an integral multiple of the quantity of sub-bands is a first interlace, and that an interlace corresponding to an interlace size value that is less than the quantity of sub-bands is a second interlace. For example, the quantity of sub-bands is 10, K=3, and the three interlace size values are respectively one PRB, 10 PRBs, and 20 PRBs. In this case, the terminal can determine that an interlace with an interlace size value of one PRB is a second interlace, and that remaining two interlaces are both first interlaces.

2. Known set-based determining manner

The set that includes the second interlace size values or includes the first interlace size values and the second interlace size values has been described above. The set is known to the base station. In the second manner, the set is also known to the terminal. After obtaining the at least one interlace size value, the terminal compares each of the at least one interlace size value with each size value in the set. The terminal determines that an interlace corresponding to an interlace size value that is in the at least one interlace size value and that has a same value as the first interlace size value in the set is a first interlace, and that an interlace corresponding to an interlace size value that is in the at least one interlace size value and that has a same value as the second interlace size value in the set is a second interlace.

Certainly, the manner in which the terminal determines the at least one interlace based on the at least one interlace size value is not limited to the foregoing two manners. This is not limited in this embodiment of the present invention.

After the terminal determines the at least one interlace, because the at least one interlace includes at least one second interlace, the terminal needs to determine a PRB occupied by the second interlace in a sub-band, and further needs to determine REs occupied by the second interlace in one PRB. Only in this way, the terminal can completely determine the second interlace. In this embodiment of the present invention, the terminal can determine, based on the scheduling signaling, the PRB occupied by the second interlace in the sub-band. In addition, the terminal can determine, based on a total quantity of REs occupied by the second interlace and the quantity M of sub-bands, a quantity of REs occupied by the second interlace in one PRB. The following describes this method by using an example.

If the total quantity of REs occupied by the second interlace is an integral multiple of M, the second interlace may occupy equal quantities of REs in all PRBs included in the second interlace, and a quantity of REs occupied in any PRB may be SUM/M, where SUM is the total quantity of REs occupied by the second interlace.

If the total quantity of REs occupied by the second interlace is not an integral multiple of M, the second interlace occupies $\left\lceil \dfrac{SUM}{M} \right\rceil$ REs in each of first-part PRBs occupied by the second interlace, and the second interlace occupies $\left\lfloor \dfrac{SUM}{M} \right\rfloor$ REs in each of second-part PRBs occupied by the second interlace, where $\lceil \rceil$ represents a round-up operation, $\lfloor \rfloor$ represents a round-down operation, % represents a REM operation, and SUM still represents the total quantity of REs occupied by the second interlace.

Sub-bands in which the first-part PRBs are located are sub-bands with sequence numbers from 0 to SUM%M-1, and sub-bands in which the second-part PRBs are located are sub-bands with sequence numbers from SUM%M to M-1. Alternatively, sub-bands in which the first-part PRBs are located are sub-bands with sequence number from 0 to M-SUM%M-1, and sub-bands in which the second-part PRBs are located are sub-bands with sequence number from M-SUM%M to M-1.

For example, the foregoing formulas are merely examples. A method in which the terminal determines, based on the total quantity of REs occupied by the second interlace and the quantity M of sub-bands, the quantity of REs occupied by the second interlace in one PRB is not limited to the foregoing calculation method. Even, a manner in which the terminal determines the quantity of REs occupied by the second interlace in one PRB is also not limited to the manner of determining, based on the total quantity of REs occupied by the second interlace and the quantity M of sub-bands, the quantity of REs occupied by the second interlace in one PRB. A specific determining manner is not limited in this embodiment of the present invention.

In the foregoing manner, the terminal can determine a quantity of REs actually occupied by the second interlace in each PRB, thereby determining the second interlace. Certainly, the terminal can use the foregoing manner to determine the quantity of REs occupied by the second interlace in each PRB, and the base station can also use the same manner to determine the quantity of REs occupied by the second interlace in each PRB, so that the terminal can perform correct mapping, and the base station can perform correct receiving. A manner used by the terminal and the base station to determine the quantity of REs occupied by the second interlace in each PRB may be determined by the base station and notified to the terminal by the base station, may be pre-defined by using a standard or a protocol, or may be predetermined by the base station and the terminal through negotiation.

It can be learned, based on the foregoing descriptions, that the scheduling signaling may indicate the at least one interlace. Furthermore, in addition to indicating the at least one interlace, the scheduling signaling may further indicate a position of the at least one interlace. The position herein is mainly a frequency domain position. In other words, in addition to determining the at least one interlace based on the scheduling signaling, the terminal may further determine, based on the scheduling signaling, a specific frequency domain position of the PRB occupied by the at least one interlace in each sub-band; and for the second interlace in the at least one interlace, the terminal may further determine, based on the scheduling signaling, a frequency domain position of an RE occupied by the second interlace in the PRB. This is equivalent that the terminal needs to determine a frequency domain position of the at least one interlace based on the scheduling signaling. Then, the terminal maps uplink data to an RE occupied by the at least one interlace, and then send the uplink data to the base station. Certainly, a manner in which the terminal determines, based on a second interlace size value, a frequency domain position of a RE occupied by a second interlace in a corresponding PRB is not limited to a manner of determining the frequency domain position based on the scheduling signaling. For example, the frequency domain position may alternatively be pre-defined by using a protocol or a standard. This is not limited in this embodiment of the present invention.

If the second interlace occupies some REs in the corresponding PRB, in a possible implementation, the REs occupied by the second interlace in the occupied PRB may be REs that are distributed continuously in frequency domain. In this way, the terminal can implement continuous mapping during uplink data mapping, and channel estimation performance is also improved.

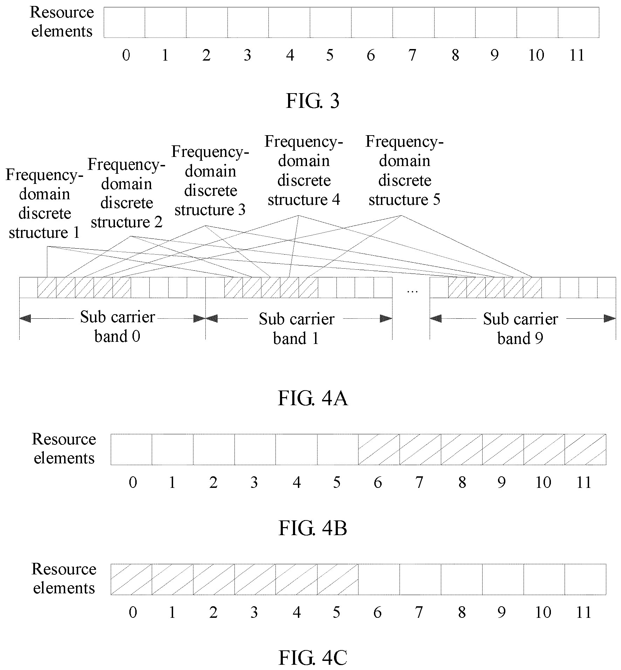

In addition, the REs occupied by the second interlace in the PRB may be located at an edge position of the PRB in frequency domain. For example, FIG. 3 is a schematic diagram of frequency domain distribution of REs included in a PRB. 12 REs included in the PRB are respectively numbered from 0 to 11 in frequency domain, and 0 to 11 may also be considered as numbers of subcarriers. The second interlace occupies the PRB, for example, occupies six REs in the PRB. In this case, the six REs may be six REs numbered from 0 to 5, or may be six REs numbered from 7 to 11. Because the second interlace occupies some REs in the PRB, a remaining RE in the PRB may be further used by another terminal. In this case, the REs occupied by the second interlace in the PRB are located at the edge position, rather than a central position, of the PRB in frequency domain, and therefore it can be ensured, as far as possible, that REs occupied by each terminal are continuous. In addition, because the occupied REs are continuous, if the base station needs to notify the terminal of frequency domain positions of the REs occupied by the second interlace in the PRB, when notifying the terminal, the base station only needs to notify, by using 1 bit (bit) or a relatively small quantity of bits in the scheduling signaling, the terminal of an edge, of the PRB, at which the REs occupied by the second interlace in the PRB are located, without sequentially notifying the terminal of the frequency domain positions of all the occupied REs. This helps reduce overheads of the scheduling signaling.

It should be noted that the RE actually relates to time domain and frequency domain. For example, in an existing LTE system, one RE occupies one symbol (symbol) in time domain. This embodiment of the present invention does not concern a case in time domain. Therefore, FIG. 3 only provides descriptions in terms of frequency domain.

In a possible implementation, the at least one interlace includes one second interlace, and all remaining interlaces are first interlaces. In this case, a PRB occupied by the second interlace is adjacent to PRBs occupied by the first interlaces in frequency domain. In other words, the second interlace may be located at an edge position of the first interlaces in frequency domain. This can be understood as follows: In a same sub-band, PRBs occupied by the first interlaces may be continuous PRBs in frequency domain, and a PRB occupied by the second interlace is located at an edge of the continuous PRBs occupied by the first interlaces in frequency domain. Alternatively, this can be understood as follows: In a same sub-band, a frequency of a subcarrier occupied by the second interlace is lower than a frequency of a subcarrier occupied by the first interlace, or a frequency of a subcarrier occupied by the second interlace is higher than a frequency of a subcarrier occupied by the first interlace. In other words, the second interlace is not interleaved with the first interlaces, but is located at an edge of the first interlaces. From this perspective, alternatively, the PRB occupied by the second interlace may be at a specific distance from, and is not necessarily adjacent to, the PRBs occupied by the first interlaces in frequency domain. If the PRB occupied by the second interlace is adjacent to the PRBs occupied by the first interlaces, continuous mapping can be implemented, thereby improving mapping performance.

For example, in an LAA system, an uplink bandwidth allocated to the terminal is 20 MHz, and a quantity of sub-bands is 10. If a total uplink data channel bandwidth allocated to the terminal by the base station is 45 PRBs, in other words, one type of interlace size is allocated to the terminal, where the interlace size includes an uplink bandwidth of 45 PRBs occupied by interlaces allocated to the terminal, in other words, the allocated interlaces include one second interlace, the terminal can determine five interlace size values: 10, 10, 10, 10, and 5, where a unit is a PRB. In addition, the terminal determines that interlaces whose interlace size values are 10 are first interlaces and that an interlace whose interlace size value is 5 is a second interlace. The five interlaces are respectively numbered from interlace 1 to interlace 5. In addition, the terminal may also determine, based on the scheduling signaling, frequency domain positions of the five interlaces and a frequency domain position of an RE occupied by the second interlace in a PRB. A total quantity of REs included in the second interlace is an integral multiple of the quantity of sub-bands. Therefore, the second interlace occupies a same quantity of REs in all occupied PRBs. A total uplink bandwidth occupied by the second interlace is five PRBs. For example, one PRB includes 12 REs. In this case, a total quantity of REs occupied by the second interlace is 60, and it can be learned, based on the formula SUM/M, that the second interlace occupies six REs in each occupied PRB.

FIG. 4A is a schematic frequency domain diagram of interlaces allocated to a terminal. In FIG. 4A, each block represents one PRB. Based on the foregoing descriptions, an uplink data channel is mapped to an interlace 1 to an interlace 5. The interlace 2 to the interlace 5 are first interlaces, and the interlace 1 is a second interlace. In other words, the second interlace is located at an edge of the first interlaces in frequency domain. For example, an RE occupied by the second interlace in an occupied PRB is adjacent to REs occupied by the first interlaces in occupied PRBs in frequency domain. Each interlace occupies one PRB in one sub-band. A sub-band 0 is used as an example. A first diagonal block on the left represents a PRB occupied by the interlace 1, a second diagonal block on the left represents a PRB occupied by the interlace 2, and so on. Each diagonal block represents a PRB occupied by one interlace. The same can be said for the other sub-bands. Details are not described. If there is a total of 10 sub-bands, the interlace 1 occupies one PRB in each of the 10 sub-bands. For a frequency domain position, refer to a frequency domain position of the occupied PRB in the sub-band 0. The same can be said for the other interlaces. It can be learned, based on the foregoing calculation, that the interlace 1 used as the second interlace occupies six REs in each PRB. In this case, the six REs may be located in an edge area of the PRB and may be six continuous REs. FIG. 4B is a schematic diagram of any PRB occupied by the interlace 1. In FIG. 4B, each block represents one RE. Frequency domain positions of REs occupied by the interlace 1 in the PRB may be REs represented by diagonal blocks in FIG. 4B. If the 12 REs are respectively numbered from 0 to 11, the interlace 1 may occupy REs numbered from 6 to 11. Alternatively, in FIG. 4A, the interlace 1 to the interlace 4 are first interlaces, and the interlace 5 is a second interlace. In other words, the second interlace is located at an edge of the first interlaces in frequency domain. Each interlace occupies one PRB in one sub-band. A sub-band 0 is used as an example. A first diagonal block on the left represents a PRB occupied by the interlace 1, a second diagonal block on the left represents a PRB occupied by the interlace 2, and so on. Each diagonal block represents a PRB occupied by one interlace. The same can be said for the other sub-bands. Details are not described. It can be learned, based on the foregoing calculation, that the interlace 5 used as the second interlace occupies six REs in each PRB. In this case, the six REs may be located in an edge area of the PRB and may be six continuous REs. FIG. 4C is a schematic diagram of any PRB occupied by the interlace 5. In FIG. 4C, each block represents one RE. Frequency domain positions of REs occupied by the interlace 5 in the PRB may be REs represented by diagonal blocks in FIG. 4C. If the 12 REs are respectively numbered from 0 to 11, the interlace 5 may occupy REs numbered from 0 to 5.

Similarly, this embodiment of the present invention does not concern a case in time domain. Therefore, FIG. 4A to FIG. 4C only provide descriptions in terms of frequency domain.

The foregoing shows merely examples. If the at least one interlace allocated to the terminal includes one second interlace, a mapping manner is not limited thereto.

As an alternative solution to the solution in which the at least one interlace includes one second interlace, in a possible implementation, the at least one interlace includes a plurality of second interlaces. For example, all of the at least one interlace is the second interlace.

For example, in an LAA system, an uplink bandwidth allocated to the terminal is 20 MHz, and a quantity of sub-bands is 10. If a total uplink data channel bandwidth allocated to the terminal by the base station is 25 PRBs, in other words, one type of interlace size is allocated to the terminal, where the interlace size includes an uplink bandwidth of 25 PRBs occupied by interlaces allocated to the terminal and an interlace quantity of 5, and an allocation manner is the second allocation manner, in other words, all the at least one interlace is the second interlace, the terminal can determine five interlace size values: 5, 5, 5, 5, and 5, where a unit is a PRB. In addition, the terminal determines that all the five interlaces are second interlaces, and the five interlaces are respectively numbered from interlace 1 to interlace 5. In addition, optionally, the terminal may also determine, based on the scheduling signaling, frequency domain positions of the five interlaces and frequency domain positions of REs occupied by the five second interlaces in PRBs. For example, all the frequency domain positions of the REs occupied by the five second interlaces in the PRBs are the same. A total quantity of REs included in each of the five second interlaces is an integral multiple of the quantity of sub-bands. Therefore, the five second interlaces each occupy a same quantity of REs in all occupied PRBs. A total uplink bandwidth occupied by any one of the five second interlaces is five PRBs. For example, one PRB includes 12 REs. In this case, a total quantity of REs occupied by the second interlace is 60, and it can be learned, based on the formula SUM/M, that the second interlace occupies six REs in each occupied PRB. In this case, for a mapping manner, still refer to FIG. 4A to FIG. 4C. An only difference lies in that in this implementation, all interlaces in FIG. 4A are second interlaces, and FIG. 4B and FIG. 4C both represent frequency domain positions of REs occupied by any one of the interlace 1 to the interlace 5 in one PRB.

S24. The terminal initiates uplink data transmission by using the at least one interlace, and the base station receives, by using the at least one interlace, the uplink transmission initiated by the terminal.

Specifically, the terminal can map uplink data to the at least one interlace, and then send the uplink data to the base station; and the base station receives, by using the at least one interlace, the uplink data sent by the terminal.

After determining the at least one interlace, the terminal can perform uplink data mapping, and the base station may also determine the at least one interlace in the same manner. Therefore, the base station can correctly receive, by using the at least one interlace, the uplink data sent by the terminal.

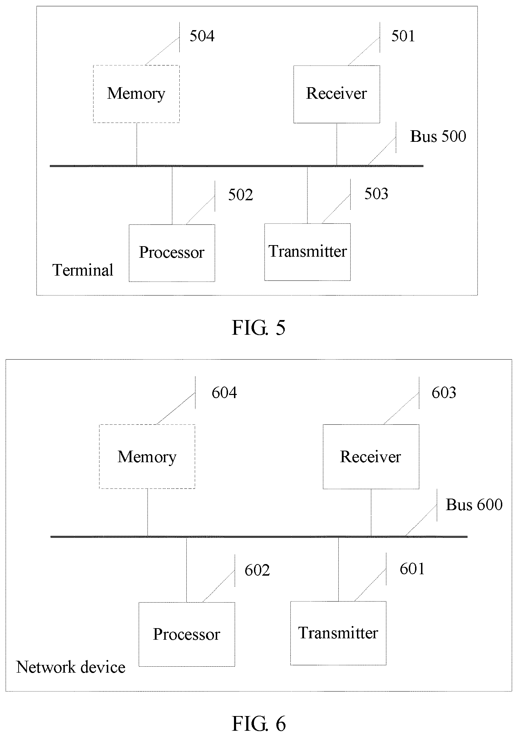

The foregoing describes the uplink resource allocation method provided in the embodiments of the present invention, and the following describes a corresponding device provided in the embodiments of the present invention with reference to the accompanying drawings. Referring to FIG. 5, an embodiment of the present invention provides a terminal. The terminal may include a receiver 501, a processor 502, and a transmitter 503.

The receiver 501 may pertain to a radio frequency system and is configured to perform network communication with an external device, for example, may communicate with the external device via a network such as Ethernet, a radio access network, or a wireless local area network.

The processor 502 may include a central processing unit (CPU) or an application-specific integrated circuit (application-specific integrated circuit, ASIC), may include one or more integrated circuits configured to control program execution, may include a hardware circuit developed by using a field programmable gate array (field programmable gate array, FPGA), or may include a baseband chip.

The transmitter 503 may pertain to the radio frequency system and is configured to perform network communication with the external device, for example, may communicate with the external device via the network such as the Ethernet, the radio access network, or the wireless local area network.

In a possible implementation, the terminal may further include a memory 504, which is also shown in FIG. 5. The memory 504 is not a mandatory component, and therefore is drawn in a form of a dashed-line box in FIG. 5, to be differentiated from the mandatory components. There may be one or more memories 504. The memory 504 may include a read-only memory (read-only memory, ROM), a random access memory (random access memory, RAM), a magnetic disk memory, or the like. The memory 504 may be configured to store program code needed by the processor 502 to execute a task, and may be further configured to store data.

The receiver 501, the memory 504, and the transmitter 503 may be connected to the processor 502 by using a bus 500 (this is used as an example in FIG. 5), or may be connected to the processor 502 by using a dedicated connection line.

Code corresponding to the method described above is built into a chip by designing programming for the processor 502, so that when the chip runs, the method provided in the embodiment shown in FIG. 2 can be performed. How to design programming for the processor 502 is a technology well-known to a person skilled in the art. Details are not described herein.

The terminal may be configured to perform the method provided in the embodiment shown in FIG. 2, and is, for example, the terminal described in the embodiment shown in FIG. 2. Therefore, for functions or the like implemented by the units in the terminal, refer to the descriptions in the foregoing method part. Details are not described herein.

Referring to FIG. 6, an embodiment of the present invention provides a network device. The network device may include a transmitter 601, a processor 602, and a receiver 603.

The transmitter 601 may pertain to a radio frequency system and is configured to perform network communication with an external device, for example, may communicate with the external device via a network such as Ethernet, a radio access network, or a wireless local area network.

The processor 602 may include a CPU or an ASIC, may include one or more integrated circuits configured to control program execution, may include a hardware circuit developed by using an FPGA, or may include a baseband chip.

The receiver 603 may pertain to the radio frequency system and is configured to perform network communication with the external device, for example, may communicate with the external device via the network such as the Ethernet, the radio access network, or the wireless local area network.

In a possible implementation, the network device may further include a memory 604, which is also shown in FIG. 6. The memory 604 is not a mandatory component, and therefore is drawn in a form of a dashed-line box in FIG. 6, to be differentiated from the mandatory components. There may be one or more memories 604. The memory 604 may include a ROM, a RAM, a magnetic disk memory, and the like. The memory 604 may be configured to store program code needed by the processor 602 to execute a task, and may be further configured to store data.

The transmitter 601, the memory 604, and the receiver 603 may be connected to the processor 602 by using a bus 600 (this is used as an example in FIG. 6), or may be connected to the processor 602 by using a dedicated connection line.

Code corresponding to the method described above is built into a chip by designing programming for the processor 602, so that when the chip runs, the method provided in the embodiment shown in FIG. 2 can be performed. How to design programming for the processor 602 is a technology well-known to a person skilled in the art. Details are not described herein.

The network device may be configured to perform the method provided in the embodiment shown in FIG. 2, and is, for example, the base station described in the embodiment shown in FIG. 2. Therefore, for functions or the like implemented by the units in the network device, refer to the descriptions in the foregoing method part. Details are not described herein.

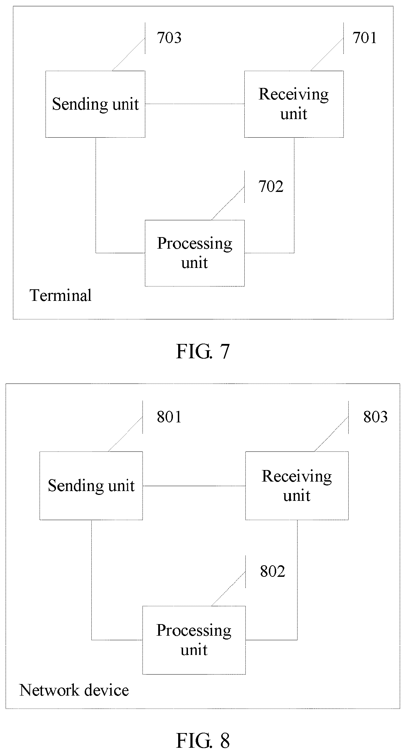

Referring to FIG. 7, based on a same inventive concept, an embodiment of the present invention provides a terminal. The terminal may include a receiving unit 701, a processing unit 702, and a sending unit 703.

During actual application, an entity device corresponding to the receiving unit 701 may be the receiver 501 in FIG. 5, an entity device corresponding to the processing unit 702 may be the processor 502 in FIG. 5, and an entity device corresponding to the sending unit 703 may be the transmitter 503 in FIG. 5.

The terminal may be configured to perform the method provided in the embodiment shown in FIG. 2, and is, for example, the terminal described in the embodiment shown in FIG. 2. Therefore, for functions or the like implemented by the units in the terminal, refer to the descriptions in the foregoing method part. Details are not described herein.

Referring to FIG. 8, based on a same inventive concept, an embodiment of the present invention provides a network device. The network device may include a sending unit 801, a processing unit 802, and a receiving unit 803.

During actual application, an entity device corresponding to the sending unit 801 may be the transmitter 601 in FIG. 6, an entity device corresponding to the processing unit 802 may be the processor 602 in FIG. 6, and an entity device corresponding to the receiving unit 803 may be the receiver 603 in FIG. 6.

The network device may be configured to perform the method provided in the embodiment shown in FIG. 2, and is, for example, the base station described in the embodiment shown in FIG. 2. Therefore, for functions or the like implemented by the units in the network device, refer to the descriptions in the foregoing method part. Details are not described herein.

In the embodiments of the present invention, the terminal may determine the at least one frequency-domain discrete structure based on the scheduling signaling sent by the network device. The at least one frequency-domain discrete structure may include a frequency-cy-domain discrete structure whose size value is equal to the size value of the second frequency-domain discrete structure, in other words, include the second frequency-domain discrete structure. The size value of the second frequency-domain discrete structure is relatively small. To be specific, the second frequency-domain discrete structure occupies a relatively low bandwidth. In this case, even if a resource is allocated by using the frequency-domain discrete structure as a granularity, because the allocated frequency-domain discrete structure includes the second frequency-domain discrete structure, a relatively low bandwidth is occupied.

Therefore, this is also equivalent that a resource allocation granularity is refined, so that a resource allocation manner is more flexible, thereby improving uplink transmission efficiency of the terminal.

In the present invention, it should be understood that the disclosed device and method may be implemented in another manner. For example, the foregoing described apparatus embodiments are merely examples. For example, the unit or unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

An embodiment of the present invention further provides a computer storage medium. This embodiment is not covered by the scope of the independent claims. The computer storage medium may store a program. When the program is executed, some or all of steps of any method recorded in the foregoing method embodiment may be performed. The functional units in the embodiments of the present invention may be integrated into one processing unit, or each of the units may be an independent physical module.

When the integrated unit is implemented in a form of a software functional unit and sold or used as an independent product, the integrated unit may be stored in a computer-readable storage medium. Based on such an understanding, all or some of the technical solutions of the present invention may be implemented in a form of a software product. The computer software product is stored in a storage medium and includes several instructions for instructing a computer device, for example, the computer device may be a personal computer, a server, or a network device, or a processor (processor) to perform all or some of the steps of the method described in the embodiments of the present invention. The foregoing storage medium includes various media that can store program code, such as a Universal Serial Bus flash drive (Universal Serial Bus flash drive), a removable hard disk, a ROM, a RAM, a magnetic disk, or an optical disc.

The foregoing described embodiments are merely used to describe the technical solutions of the present invention in detail. However, descriptions of the foregoing embodiments are merely used to help understand the method in the embodiments of the present invention and should not be construed as a limitation to the embodiments of the present invention. Any variation or replacement readily figured out by a person skilled in the art shall fall within the protection scope of the present invention as defined by the appended claims.

**Claims**

1. An uplink data transmission method, comprising:

   receiving (S22), by a terminal, scheduling signaling sent by a network device, wherein the scheduling signaling is used to indicate at least one frequency-domain discrete structure;
   determining (S23), by the terminal, the at least one frequency-domain discrete structure based on the scheduling signaling, wherein a size value of the at least one frequency-domain discrete structure belongs to a set that comprises a plurality of size values of frequency-domain discrete structures, the set comprises a size value of a first frequency-domain discrete structure and a size value of a second frequency-domain discrete structure or the set comprises the size value of the second frequency-domain discrete structure, and the size value of the second frequency-domain discrete structure is less than the size value of the first frequency-domain discrete structure; and
   initiating (S24), by the terminal, uplink data transmission by using the at least one frequency-domain discrete structure, wherein the terminal maps uplink data to an resource element occupied by the at least one frequency-domain discrete structure,
   wherein the at least one frequency-domain discrete structure comprises a plurality of second frequency-domain discrete structures that have a same size value, and resource elements occupied by each of the second frequency-domain discrete structures in an occupied physical resource block are distributed continuously in frequency domain,
wherein the method further comprises:

   determining, by the terminal based on the scheduling signaling, frequency domain positions of the resource elements occupied by the second frequency-domain discrete structures in the physical resource block, wherein the frequency domain position of the second frequency-domain discrete structure is notified to the terminal by using the scheduling signaling.
   wherein an uplink bandwidth allocated to the terminal is divided into a plurality of sub-bands in frequency domain, and the frequency-domain discrete structure occupies at least one resource element in at least one physical resource block in the sub-band,
   wherein the determining (S23), by the terminal, the at least one frequency-domain discrete structure based on the scheduling signaling comprises:
   determining, by the terminal, a physical resource block occupied by the at least one frequency-domain discrete structure in the sub-band and the size value of the at least one frequency-domain discrete structure based on a resource indication value comprised in the scheduling signaling.

2. The method according to claim 1, wherein the size value of the frequency-domain discrete structure is an uplink bandwidth occupied by the frequency-domain discrete structure, a quantity of resource elements occupied by the first frequency-domain discrete structure in a physical resource block occupied by the first frequency-domain discrete structure is equal to a total quantity of resource elements comprised in the physical resource block, and a quantity of resource elements occupied by the second frequency-domain discrete structure in a physical resource block occupied by the second frequency-domain discrete structure is less than a total quantity of resource elements comprised in the physical resource block.

3. An uplink data transmission method, comprising:

   determining (S21), by a network device, at least one frequency-domain discrete structure, wherein a size value of the at least one frequency-domain discrete structure belongs to a set that comprises a plurality of size values of frequency-domain discrete structures, the set comprises a size value of a first frequency-domain discrete structure and a size value of a second frequency-domain discrete structure or the set comprises the size value of the second frequency-domain discrete structure, and the size value of the second frequency-domain discrete structure is less than the size value of the first frequency-domain discrete structure;

sending (S22), by the network device, scheduling signaling to a terminal, wherein the scheduling signaling is used to indicate the at least one frequency-domain discrete structure; and

receiving (S24), by the network device by using the at least one frequency-domain discrete structure, uplink data transmission initiated by the terminal,

wherein the at least one frequency-domain discrete structure comprises a plurality of second frequency-domain discrete structures that have a same size value, and resource elements occupied by each of the second frequency-domain discrete structures in an occupied physical resource block are distributed continuously in frequency domain,

wherein the scheduling signaling is further used to indicate frequency domain positions of the resource elements occupied by the second frequency-domain discrete structures in the physical resource block,

wherein the scheduling signaling carries a resource indication value, and the resource indication value is used to indicate a quantity of physical resource blocks occupied by the at least one frequency-domain discrete structure in a sub-band and the size value of the at least one frequency-domain discrete structure.

4. The method according to claim 3, wherein the size value of the frequency-domain discrete structure is an uplink bandwidth occupied by the frequency-domain discrete structure, a quantity of resource elements occupied by the first frequency-domain discrete structure in an occupied physical resource block is equal to a total quantity of resource elements comprised in the physical resource block, and a quantity of resource elements occupied by the second frequency-domain discrete structure in an occupied physical resource block is less than a total quantity of resource elements comprised in the physical resource block.

5. The method according to any one of claims 3 to 4, wherein the at least one frequency-domain discrete structure comprises one second frequency-domain discrete structure, physical resource blocks occupied by the first frequency-domain discrete structure in the sub-band are distributed continuously in frequency domain, and a resource element occupied by the second frequency-domain discrete structure in the occupied physical resource block is adjacent to a resource element occupied by the first frequency-domain discrete structure in the occupied physical resource block in frequency domain.

6. An apparatus, configured to perform any method of claims 1-2.

7. An apparatus, configured to perform any method of claims 3-5.

**Patentansprüche**

1. Aufwärtsstrecken-Datenübertragungsverfahren, wobei das Verfahren Folgendes umfasst:

Empfangen (S22) einer Planungssignalisierung, die durch eine Netzvorrichtung gesendet wird, durch ein Endgerät, wobei die Planungssignalisierung verwendet wird, um wenigstens eine diskrete Struktur im Frequenzbereich anzugeben;

Bestimmen (S23) der wenigstens einen diskreten Struktur im Frequenzbereich auf der Grundlage der Planungssignalisierung durch das Endgerät, wobei ein Größenwert der wenigstens einen diskreten Struktur im Frequenzbereich zu einem Satz gehört, der mehrere Größenwerte diskreter Strukturen im Frequenzbereich umfasst, wobei der Satz einen Größenwert einer ersten diskreten Struktur im Frequenzbereich und einen Größenwert einer zweiten diskreten Struktur im Frequenzbereich umfasst oder wobei der Satz den Größenwert der zweiten diskreten Struktur im Frequenzbereich umfasst und wobei der Größenwert der zweiten diskreten Struktur im Frequenzbereich kleiner als der Größenwert der ersten diskreten Struktur im Frequenzbereich ist; und

Initiieren (S24) einer Aufwärtsstreckendatenübertragung unter Verwendung der wenigstens einen diskreten Struktur im Frequenzbereich durch das Endgerät, wobei das Endgerät Aufwärtsstreckendaten auf ein Betriebsmittelelement abbildet, das durch die wenigstens eine diskrete Struktur im Frequenzbereich belegt ist, wobei die wenigstens eine diskrete Struktur im Frequenzbereich mehrere zweite diskrete Strukturen im Frequenzbereich umfasst, die einen selben Größenwert aufweisen, und wobei die Betriebsmittelelemente, die durch jede der zweiten diskreten Strukturen im Frequenzbereich in einem belegten Block physischer Betriebsmittel belegt sind, im Frequenzbereich kontinuierlich verteilt sind, wobei das Verfahren ferner Folgendes umfasst:

Bestimmen von Frequenzbereichspositionen der durch die zweiten diskreten Strukturen im Frequenzbereich belegten Betriebsmittelelemente in dem Block physischer Betriebsmittel durch das Endgerät auf der Grundlage der Planungssignalisierung, wobei die Frequenzbereichsposition der zweiten diskreten Struktur im Frequenzbereich dem Endgerät unter Verwendung der Planungssignalisierung mitgeteilt wird, wobei eine Aufwärtsstreckenbandbreite, die dem Endgerät zugeteilt wird, in mehrere Teilbänder im Frequenzbereich unterteilt ist und wobei die diskrete Struktur im Frequenzbereich wenigstens ein Betriebsmittelelement in wenigstens einem Block physischer Betriebsmittel in dem Teilband belegt,

wobei das Bestimmen (S23) der wenigstens einen diskreten Struktur im Frequenzbereich auf der Grundlage der Planungssignalisierung durch das Endgerät Folgendes umfasst:

Bestimmen eines Blocks physischer Betriebsmittel, der durch die wenigstens eine diskrete Struktur im Frequenzbereich in dem Teilband belegt ist, und des Größenwerts der wenigstens einen diskreten Struktur im Frequenzbereich auf der Grundlage eines Betriebsmittelangabewerts, der in der Planungssignalisierung enthalten ist, durch das Endgerät.

2.  Verfahren nach Anspruch 1, wobei der Größenwert der diskreten Struktur im Frequenzbereich eine Aufwärtsstreckenbandbreite ist, die durch die diskrete Struktur im Frequenzbereich belegt ist, und wobei eine Menge von Betriebsmittelelementen, die durch die erste diskrete Struktur im Frequenzbereich in einem Block physischer Betriebsmittel, der durch die erste diskrete Struktur im Frequenzbereich belegt ist, belegt sind, gleich einer Gesamtmenge von in dem Block physischer Betriebsmittel enthaltenen Betriebsmittelelementen ist und wobei eine Menge von Betriebsmittelelementen, die durch die zweite diskrete Struktur im Frequenzbereich in einem Block physischer Betriebsmittel, der durch die zweite diskrete Struktur im Frequenzbereich belegt ist, belegt sind, kleiner als eine Gesamtmenge von in dem Block physischer Betriebsmittel enthaltenen Betriebsmittelelementen ist.

3.  Aufwärtsstrecken-Datenübertragungsverfahren, das Folgendes umfasst:

Bestimmen (S21) wenigstens einer diskreten Struktur im Frequenzbereich durch eine Netzvorrichtung, wobei ein Größenwert der wenigstens einen diskreten Struktur im Frequenzbereich zu einem Satz gehört, der mehrere Größenwerte diskreter Strukturen im Frequenzbereich umfasst, wobei der Satz einen Größenwert einer ersten diskreten Struktur im Frequenzbereich und einen Größenwert einer zweiten diskreten Struktur im Frequenzbereich umfasst oder wobei der Satz den Größenwert der zweiten diskreten Struktur im Frequenzbereich umfasst und wobei der Größenwert der zweiten diskreten Struktur im Frequenzbereich kleiner als der Größenwert der ersten diskreten Struktur im Frequenzbereich ist;

Senden (S22) einer Planungssignalisierung an ein Endgerät durch die Netzvorrichtung, wobei die Planungssignalisierung verwendet wird, um die wenigstens eine diskrete Struktur im Frequenzbereich anzugeben; und

Empfangen (S24) einer durch das Endgerät initiierten Aufwärtsstreckendatenübertragung durch die Netzvorrichtung unter Verwendung der wenigstens einen diskreten Struktur im Frequenzbereich,

wobei die wenigstens eine diskrete Struktur im Frequenzbereich mehrere zweite diskrete Strukturen im Frequenzbereich umfasst, die einen selben Größenwert aufweisen, und wobei die Betriebsmittelelemente, die durch jede der zweiten diskreten Strukturen im Frequenzbereich in einem belegten Block physischer Betriebsmittel belegt sind, in dem Frequenzbereich kontinuierlich verteilt sind, wobei die Planungssignalisierung ferner verwendet wird, um Frequenzbereichspositionen der Betriebsmittelelemente anzugeben, die durch die zweiten diskreten Strukturen im Frequenzbereich in dem Block physischer Betriebsmittel belegt sind,

wobei die Planungssignalisierung einen Betriebsmittelangabewert übermittelt und wobei der Betriebsmittelangabewert verwendet wird, um eine Menge von Blöcken physischer Betriebsmittel, die durch die wenigstens eine diskrete Struktur im Frequenzbereich in einem Teilband belegt sind, und den Größenwert der wenigstens einen diskreten Struktur im Frequenzbereich anzugeben.

4.  Verfahren nach Anspruch 3, wobei der Größenwert der diskreten Struktur im Frequenzbereich eine durch die diskrete Struktur im Frequenzbereich belegte Aufwärtsstreckenbandbreite ist, wobei eine Menge von durch die erste diskrete Struktur im Frequenzbereich belegten Betriebsmittelelementen in einem belegten Block physischer Betriebsmittel gleich einer Gesamtmenge von in dem Block physischer Betriebsmittel enthaltenen Betriebsmittelelementen ist und wobei eine Menge von durch die zweite diskrete Struktur im Frequenzbereich belegten Betriebsmittelelementen in einem belegten Block physischer Betriebsmittel kleiner als eine Gesamtmenge von in dem Block physischer Betriebsmittel enthaltenen Betriebsmittelelementen ist.

5. Verfahren nach einem der Ansprüche 3 bis 4, wobei die wenigstens eine diskrete Struktur im Frequenzbereich eine zweite diskrete Struktur im Frequenzbereich umfasst, wobei die durch die erste diskrete Struktur im Frequenzbereich belegten Blöcke physischer Betriebsmittel in dem Teilband im Frequenzbereich kontinuierlich verteilt sind und wobei ein durch die zweite diskrete Struktur im Frequenzbereich belegtes Betriebsmittelelement in dem belegten Block physischer Betriebsmittel benachbart zu einem durch die erste diskrete Struktur im Frequenzbereich belegten Betriebsmittelelement in dem belegten Block physischer Betriebsmittel im Frequenzbereich ist.

6. Vorrichtung, die zum Ausführen eines Verfahrens der Ansprüche 1-2 konfiguriert ist.

7. Vorrichtung, die zum Ausführen eines Verfahrens der Ansprüche 3-5 konfiguriert ist.

**Revendications**

1. Procédé de transmission de données de liaison montante, comprenant :

la réception (S22), par un terminal, d'une signalisation d'ordonnancement envoyée par un dispositif de réseau, la signalisation d'ordonnancement servant à indiquer au moins une structure discrète du domaine fréquentiel ;
la détermination (S23), par le terminal, de l'au moins une structure discrète du domaine fréquentiel en fonction de la signalisation d'ordonnancement, dans lequel une valeur de taille de l'au moins une structure discrète du domaine fréquentiel appartient à un ensemble qui comprend une pluralité de valeurs de taille de structures discrètes du domaine fréquentiel, l'ensemble comprend une valeur de taille d'une première structure discrète du domaine fréquentiel et une valeur de taille d'une deuxième structure discrète du domaine fréquentiel ou l'ensemble comprend la valeur de taille de la deuxième structure discrète du domaine fréquentiel, et la valeur de taille de la deuxième structure discrète du domaine fréquentiel est inférieure à la valeur de taille de la première structure discrète du domaine fréquentiel ; et
le lancement (S24), par le terminal, d'une transmission de données de liaison montante en utilisant l'au moins une structure discrète du domaine fréquentiel, dans lequel le terminal met en correspondance les données de liaison montante avec un élément de ressource occupé par l'au moins une structure discrète du domaine fréquentiel,
dans lequel l'au moins une structure discrète du domaine fréquentiel comprend une pluralité de deuxièmes structures discrètes du domaine fréquentiel qui ont une valeur de taille identique, et les éléments de ressources occupés par chacune des deuxièmes structures discrètes du domaine fréquentiel dans un bloc de ressources physiques occupé sont distribués continûment dans le domaine fréquentiel,
le procédé comprenant en outre :

la détermination, par le terminal en fonction de la signalisation d'ordonnancement, de positions dans le domaine fréquentiel des éléments de ressource occupés par les deuxièmes structures discrètes du domaine fréquentiel dans le bloc de ressources physiques,
dans lequel la position dans le domaine fréquentiel de la deuxième structure discrète du domaine fréquentiel est notifiée au terminal à l'aide de la signalisation d'ordonnancement, dans lequel une bande passante de liaison montante allouée au terminal est divisée en une pluralité de sous-bandes dans le domaine fréquentiel, et la structure discrète du domaine fréquentiel occupe au moins un élément de ressource dans au moins un bloc de ressources physiques dans la sous-bande,
dans lequel la détermination (S23), par le terminal, de l'au moins une structure discrète du domaine fréquentiel en fonction de la signalisation d'ordonnancement comprend :
la détermination, par le terminal, d'un bloc de ressources physiques occupé par l'au moins une structure discrète du domaine fréquentiel dans la sous-bande et la valeur de taille de l'au moins une structure discrète du domaine fréquentiel en fonction d'une valeur d'indication de ressource comprise dans la signalisation d'ordonnancement.

2. Procédé selon la revendication 1, dans lequel la valeur de taille de la structure discrète du domaine fréquentiel est une bande passante de liaison montante occupée par la structure discrète du domaine fréquentiel, une quantité d'éléments de ressource occupés par la première structure discrète du domaine fréquentiel dans un bloc de ressources physiques occupé par la première structure discrète du domaine fréquentiel est égale à une quantité totale d'éléments de ressources compris dans le bloc de ressources physiques, et une quantité d'éléments de ressources occupés par la deuxième structure discrète du domaine fréquentiel dans un bloc de ressources physiques occupé par la deuxième structure discrète du domaine fréquentiel est inférieur à une quantité totale d'éléments de ressources compris dans le bloc de ressources physiques.

3. Procédé de transmission de données de liaison montante, comprenant :

la détermination (S21), par un dispositif de réseau, d'au moins une structure discrète du domaine fréquentiel, dans lequel une valeur de taille de l'au moins une structure discrète du domaine fréquentiel appartient à un ensemble qui comprend une pluralité de valeurs de taille de structures discrètes du domaine fréquentiel, l'ensemble comprend une valeur de taille d'une première structure discrète du domaine fréquentiel et une valeur de taille d'une deuxième structure discrète du domaine fréquentiel ou l'ensemble comprend la valeur de taille de la deuxième structure discrète du domaine fréquentiel, et la valeur de taille de la deuxième structure discrète du domaine fréquentiel est inférieure à la valeur de taille de la première structure discrète du domaine fréquentiel ;
l'envoi (S22), par le dispositif de réseau, d'une signalisation d'ordonnancement à un terminal, la signalisation d'ordonnancement servant à indiquer l'au moins une structure discrète du domaine fréquentiel ; et
la réception (S24), par le dispositif de réseau en utilisant l'au moins une structure discrète du domaine fréquentiel, d'une transmission de données de liaison montante lancée par le terminal, dans lequel l'au moins une structure discrète du domaine fréquentiel comprend une pluralité de deuxièmes structures discrètes du domaine fréquentiel qui ont une valeur de taille identique, et les éléments de ressources occupés par chacune des deuxièmes structures discrètes du domaine fréquentiel dans un bloc de ressources physiques occupé sont distribués continûment dans le domaine fréquentiel,
dans lequel la signalisation d'ordonnancement est en outre utilisée pour indiquer des positions dans le domaine fréquentiel des éléments de ressource occupés par les deuxièmes structures discrètes du domaine fréquentiel dans le bloc de ressources physiques,
dans lequel la signalisation d'ordonnancement convoie une valeur d'indication de ressource, et la valeur d'indication de ressource sert à indiquer une quantité de blocs de ressources physiques occupés par l'au moins une structure discrète du domaine fréquentiel dans une sous-bande et la valeur de taille de l'au moins une structure discrète du domaine fréquentiel.

4. Procédé selon la revendication 3, dans lequel la valeur de taille de la structure discrète du domaine fréquentiel est une bande passante de liaison montante occupée par la structure discrète du domaine fréquentiel, une quantité d'éléments de ressource occupés par la première structure discrète du domaine fréquentiel dans un bloc de ressources physique occupé est égale à une quantité totale d'éléments de ressources compris dans le bloc de ressources physiques, et une quantité d'éléments de ressource occupés par la deuxième structure discrète de domaine fréquentiel dans un bloc de ressources physiques occupé est inférieur à une quantité totale d'éléments de ressources compris dans le bloc de ressources physiques.

5. Procédé selon l'une quelconque des revendications 3 à 4, dans lequel l'au moins une structure discrète du domaine fréquentiel comprend une deuxième structure discrète du domaine fréquentiel, les blocs de ressources physiques occupés par la première structure discrète du domaine fréquentiel dans la sous-bande sont distribués continûment dans le domaine fréquentiel, et un élément de ressource occupé par la deuxième structure discrète du domaine fréquentiel dans le bloc de ressources physique occupé est adjacent à un élément de ressource occupé par la première structure discrète du domaine fréquentiel dans le bloc de ressources physiques occupé dans le domaine fréquentiel.

6. Appareil, configuré pour exécuter un quelconque procédé selon les revendications 1 et 2.

7. Appareil, configuré pour exécuter un quelconque procédé selon les revendications 3 à 5.

Terminal

Network device

FIG. 1

| Terminal | Base station |
|----------|--------------|

S21. Determine at least one frequency-domain discrete structure to be allocated to a terminal

S22. Scheduling signaling (used to indicate the at least one frequency-domain discrete structure)

S23. Determine the at least one frequency-domain discrete structure based on the scheduling signaling

S24. Uplink data (mapped to the at least one frequency-domain discrete structure)

FIG. 2

Resource
elements

0  1  2  3  4  5  6  7  8  9  10  11

FIG. 3

Frequency-
domain
discrete
structure 1

Frequency-
domain
discrete
structure 2

Frequency-
domain
discrete
structure 3

Frequency-
domain
discrete
structure 4

Frequency-
domain
discrete
structure 5

...

◄───── Sub carrier ─────►◄───── Sub carrier ─────►    ◄───── Sub carrier ─────►
        band 0                     band 1                       band 9

FIG. 4A

Resource
elements

0  1  2  3  4  5  6  7  8  9  10  11

FIG. 4B

Resource
elements

0  1  2  3  4  5  6  7  8  9  10  11

FIG. 4C

504

Memory

501

Receiver

Bus 500

502

Processor

503

Transmitter

Terminal

## FIG. 5

604

Memory

603

Receiver

Bus 600

602

Processor

601

Transmitter

Network device

## FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016100407 A1

**Non-patent literature cited in the description**

- **SEQUANS COMMUNICATIONS.** RB Allocation for PUSCH. *3GPP DRAFT; R1-162756, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX ; FRANCE,* vol. RAN WG1 (Busan
- **QUALCOMM INCORPORATED.** SRS procedures for eLAA. *3GPP DRAFT; R1-164411 SRS PROCEDURES IN ELAA, 3RD GENERATION PARTNERSHIP PROJECT (3GPP), MOBILE COMPETENCE CENTRE ; 650, ROUTE DES LUCIOLES; F-06921 SOPHIA-ANTI POLIS CEDEX ; FRANCE,* vol. RAN WG1
- **HUAWEI HISILICON.** Discussion on UE/BS demodulation performance requirements for eLAA. *3GPP DRAFT; R4-1609423 ELAA DEMOD REQUIREMENTS,3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX ; FRANCE,* vol. RAN WG4 (Reno
- **MEDIATEK INC.** Considerations on PUSCH for LAA. *3GPP DRAFT; R1-160972, 3RD GENERATION PARTNERSHIP PROJECT (3GPP), MOBILE COMPETENCE CENTRE; 650, ROUTE DE LUCIOLES; F-06921 SOPHIA-ANTIPOLIS CEDEX; FRANCE,* 14 February 2016, vol. RAN WG1